# EUROPEAN PATENT APPLICATION

(11) **EP 1 977 970 A2**
(43) Date of publication of application: **08.10.2008**
(21) Application number: 08103330.0
(22) Date of filing: 02.04.2008
(51) Int. Cl.: B64C 13/10, G05G 5/03

(54) **User interface passive haptic feedback system**

(30) Priority: 04.04.2007 US 696589
(71) Applicant: Honeywell International Inc., Morristown NJ 07960 (US)
(72) Inventor: Hanlon, Casey, Queen Creek, AZ 85242 (US); Smith, Douglas C., Phoenix, AZ 85020 (US); Kuhar, Todd, Chandler, AZ 85224 (US)
(74) Representative: Buckley, Guy Julian

(57) **Abstract**

A user interface system includes a user interface (210) and a plurality of torsion bars. The user interface is configured to rotate, from a null position, about two perpendicular rotational axes (222,224). The plurality of torsion bars (326,428) are coupled to the user interface and include two or more torsion bars disposed a1ong a first one of the rotational axes and two or more torsion bars disposed along a second one of the rotational axes. Each torsion bar is configured to selectively supply a feedback force to the user interface that opposes the rotational direction and that varies as a function of the control position and the rotational direction. The system provides for the setting and adjustment of a preload force to the user interface, for retaining the set preload force, for passively returning the user interface to its null position, and for preventing each passive mechanism from introducing additional force into adjacent vectors.

## Description

### TECHNICAL FIELD

The present invention relates to user interface systems and, more particularly, to a passive haptic feedback system for a user interface, such as a pilot controlled side stick.

### BACKGROUND

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft. Although some aircraft may include additional control surfaces, the primary flight control surfaces typically include a pair of elevators, a rudder, and a pair of ailerons, and the secondary flight control surfaces typically include a plurality of flaps, slats, and spoilers.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. In most instances, this movement is effected via actuators that are coupled to the flight control surfaces.

Typically, the position commands that originate from the flight crew are supplied via some type of input control mechanism. For example, many aircraft include two yoke and wheel type of mechanisms, one for the pilot and one for the co-pilot. Either mechanism can be used to generate desired flight control surface position commands. More recently, however, aircraft are being implemented with side stick type mechanisms. Most notably in aircraft that employ a fly-by-wire system. Similar to the traditional yoke and wheel mechanisms, it is common to include multiple side sticks in the cockpit, one for the pilot and one for the co-pilot.

Most side sticks are implemented with some type of feedback mechanism for providing force feedback (or "haptic feedback") to the user, be it the pilot or the co-pilot. In some implementations, the haptic feedback mechanism is an active mechanism that includes one or more electrically controlled motors to supply force feedback to the side stick(s), and in other implementations the haptic feedback mechanism is a passive mechanism that includes one or more springs to supply force feedback to the side stick(s), in still other implementations the haptic feedback mechanism includes both active and passive mechanisms. In the latter implementations the active mechanism is a primary mechanism and includes one or more electrically controlled motors to supply the force feedback, while the passive mechanism is a backup mechanism and includes one or more tension springs.

Presently known passive feedback mechanisms, whether used as primary or backup feedback mechanisms, while useful, can present certain drawbacks. In particular, presently used passive feedback mechanisms may be overly large to meet desired performance characteristics. For example, in many implementations it is desirable that the passive mechanisms provide different force gradients for different side stick movement directions. Moreover, the passive mechanisms may need to supply a particular preload or breakout force from the side stick null position, an increasing linear force between the null and maximum position, and no reduction in the established breakout force as the side stick passes through the null position.

Hence, there is a need for a passive haptic feedback mechanism for a user interface such as, for example, an active pilot control stick, that can provide different force gradients for different user interface movement directions, and/or can supply a particular preload or breakout force from a null position, and/or an increasing linear force between the null and maximum position, and/or no reduction in the established breakout force as the user interface passes through the null position. The present invention addresses one or more of these needs.

### BRIEF SUMMARY

In one embodiment, and by way of example only, a user interface system includes a user interface and a plurality of torsion bars. The user interface is configured to rotate, from a null position, about two perpendicular rotational axes. The user interface is adapted to receive an input force and, in response to the input force, to rotate, from the null position to a control position, about one or both of the rotational axes in a rotational direction. The plurality of torsion bars are coupled to the user interface and include two or more torsion bars disposed along a first one of the rotational axes and two or more torsion bars disposed along a second one of the rotational axes. Each torsion bar is configured to selectively supply a feedback force to the user interface that opposes the rotational direction and that varies as a function of the control position and the rotational direction.

In yet another exemplary embodiment, a user interface system includes a user interface, a torsion bar, and a preload force adjustment mechanism. The user interface is configured to rotate, from a null position, about a rotational axis. The user interface is adapted to receive an input force and, in response to the input force, to rotate, from the null position to a control position, about the rotational axis. The torsion bar is coupled to, and is configured to supply a preload force to, the user interface when the user interface is in the null position. The preload force adjustment mechanism is disposed adjacent to, and is configured to adjust the preload force of, the torsion bar.

In still another exemplary embodiment, an aircraft flight control surface actuation haptic feedback system includes a flight control stick, a motor control unit, a plurality of motors, and a plurality of torsion bars. The flight control stick is configured to rotate, from a null position, about two perpendicular rotational axes. The flight control stick is adapted to receive an input force supplied by a pilot and is configured, in response to the input force, to rotate, from the null position to a control position, about one or both of the rotational axes in a rotational direction. The motor control unit is operable to selectively supply motor feedback signals. The plurality of motors are coupled to the flight control stick. Each motor is further coupled to receive the selectively supplied motor feedback signals and is operable, upon receipt thereof, to supply a variable feedback force to the flight control stick that opposes the rotational direction. The plurality of torsion bars are coupled to the user interface, and include two or more torsion bars disposed along a first one of the rotational axes and two or more torsion bars disposed along a second one of the rotational axes. Each torsion bar is configured to selectively supply a feedback force to the user interface that opposes the rotational direction and that varies as a function of the control position and the rotational direction.

Other independent features and advantages of the preferred user interface system will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figures, wherein like numerals denote like elements, and

FIG. 1 is a perspective view of an exemplary aircraft depicting primary and secondary flight control surfaces;

FIG. 2 is a schematic depicting portions of an exemplary flight control surface actuation system according one embodiment of the present invention;

FIG. 3 is a functional block diagram of the flight control surface actuation system of FIG. 2, depicting certain portions thereof in slightly more detail;

FIG. 4 is a plan view of an exemplary gimbal assembly that may be used to implement the system depicted in FIG. 3;

FIG. 5 is a cross section view of the exemplary gimbal assembly taken along line 5-5 in FIG. 4;

FIG. 6 is an exploded plan view of a portion of the exemplary gimbal assembly of FIGS. 4 and 5 showing an exemplary configuration of a passive feedback mechanism;

FIG. 7 is a cross section view taken along line 7-7 in FIG. 6; and

FIGS. 8-10 are end views of portions of the exemplary gimbal assembly of FIGS. 4 and 5 depicting rotation thereof.

### DETAILED DESCRIPTION OF THE INVENTION

The following detailed description is merely exemplary in nature and is not intended to limit the invention or the application and uses of the invention. Furthermore, there is no intention to be bound by any theory presented in the preceding background or the following detailed description. In this regard, although the user interface is depicted and described herein as being implemented in an aircraft, and more specifically in an aircraft flight control surface actuation system, the user interface could also be implemented in numerous other environments and systems.

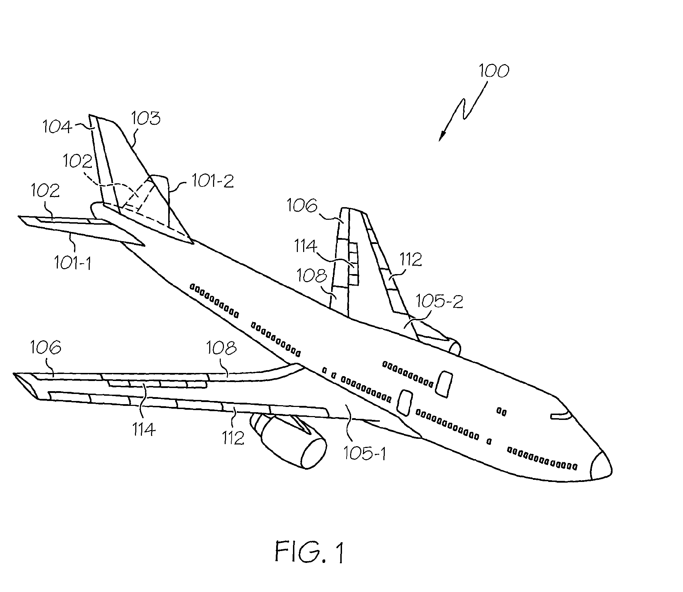

Turning first to FIG. 1, a perspective view of an exemplary aircraft is shown. In the illustrated embodiment, the aircraft 100 includes first and second horizontal stabilizers 101-1 and 101-2, respectively, a vertical stabilizer 103, and first and second wings 105-1 and 105-2, respectively. An elevator 102 is disposed on each horizontal stabilizer 101-1, 101-2, a rudder 104 is disposed on the vertical stabilizer 103, and an aileron 106 is disposed on each wing 105-1, 105-2. In addition, a plurality of flaps 108, slats 112, and spoilers 114 are disposed on each wing 105-1, 105-2. The elevators 102, the rudder 104, and the ailerons 106 are typically referred to as the primary flight control surfaces, and the flaps 108, the slats 112, and the spoilers 114 are typically referred to as the secondary flight control surfaces.

The primary flight control surfaces 102-106 control aircraft movements about the aircraft pitch, yaw, and roll axes. Specifically, the elevators 102 are used to control aircraft movement about the pitch axis, the rudder 104 is used to control aircraft movement about the yaw axis, and the ailerons 106 control aircraft movement about the roll axis. It is noted, however, that aircraft movement about the yaw axis can also be achieved by varying the thrust levels from the engines on opposing sides of the aircraft 100. It will additionally be appreciated that the aircraft 100 could include horizontal stabilizers (not shown).

The secondary control surfaces 108-114 influence the lift and drag of the aircraft 100. For example, during aircraft take-off and landing operations, when increased lift is desirable, the flaps 108 and slats 112 may be moved from retracted positions to extended positions. In the extended position, the flaps 108 increase both lift and drag, and enable the aircraft 100 to descend more steeply for a given airspeed, and also enable the aircraft 100 get airborne over a shorter distance. The slats 112, in the extended position, increase lift, and are typically used in conjunction with the flaps 108. The spoilers 114, on the other hand, reduce lift and when moved from retracted positions to extended positions, which is typically done during aircraft landing operations, may be used as air brakes to assist in slowing the aircraft 100.

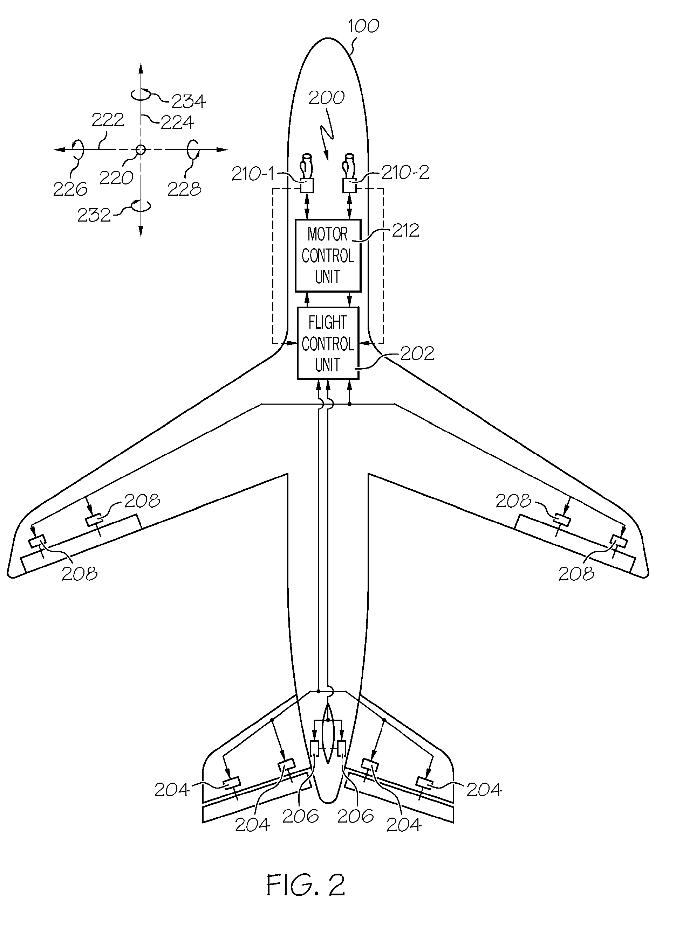

The flight control surfaces 102-114 are moved to commanded positions via a flight control surface actuation system 200, an exemplary embodiment of which is shown in FIG. 2. In the depicted embodiment, the flight control surface actuation system 200 includes one or more flight control units 202, a plurality of primary flight control surface actuators, which include elevator actuators 204, rudder actuators 206, and aileron actuators 208. It will be appreciated that the system 200 may be implemented with more than one flight control unit 202. However, for ease of description and illustration, only a single, multi-channel control unit 202 is depicted. It will additionally be appreciated that one or more functions of the control unit 202 could be implemented using a plurality of devices.

Before proceeding further, it is noted that the flight control surface actuation system 200 additionally includes a plurality of secondary control surface actuators, such as flap actuators, slat actuators, and spoiler actuators. However, the operation of the secondary flight control surfaces 108-114 and the associated actuators is not needed to fully describe and enable the present invention. Thus, for added clarity, ease of description, and ease of illustration, the secondary flight control surfaces and actuators are not depicted in FIG. 2, nor are these devices further described.

Returning now to the description, the flight control surface actuation system 200 may additionally be implemented using various numbers and types of primary flight control surface actuators 204-208. In addition, the number and type of primary flight control surface actuators 204-208 per primary flight control surface 102-106 may be varied. In the depicted embodiment, however, the system 200 is implemented such that two primary flight control surface actuators 204-208 are coupled to each primary flight control surface 102-106. Moreover, each of the primary flight control surface actuators 204-208 are preferably a linear-type actuator, such as, for example, a ballscrew actuator. It will be appreciated that this number and type of primary flight control surface actuators 204-208 are merely exemplary of a particular embodiment, and that other numbers and types of actuators 204-208 could also be used.

No matter the specific number, configuration, and implementation of the control units 202 and the primary flight control surface actuators 204-208, the control unit 202 is configured to receive aircraft flight control surface position commands from one or more input control mechanisms. In the depicted embodiment, the system 200 includes two user interfaces, a pilot user interface 210-1 and a co-pilot user interface 210-2, and one or more motor control units 212. As will be described in more detail below, the pilot 210-1 and co-pilot 210-2 user interfaces are both implemented as flight control sticks. It will be appreciated that in some embodiments, the system 200 could be implemented with more or less than this number of flight control sticks 210. It will additionally be appreciated that the system could be implemented with more than one motor control unit 212, and that each flight control unit 202 and each motor control unit 212 could be integrated into a single device. Nonetheless, the motor control unit 212, in response to position signals supplied from one or both flight control sticks 210, supplies flight control surface position signals to the flight control unit 202. The flight control unit 202, in response to the flight control surface position signals, supplies power to the appropriate primary flight control surface actuators 204-208, to move the appropriate primary flight control surfaces 102-106 to positions that will cause the aircraft 100 to implement the commanded maneuver. As depicted in phantom in FIG. 2, in other embodiments the system 200 can be configured such that one or more signals from the user interfaces 210, such as the just-mentioned position signals, are supplied directly to the flight control unit 202, or are supplied to one or more aircraft data buses for communication to the flight control unit 202.

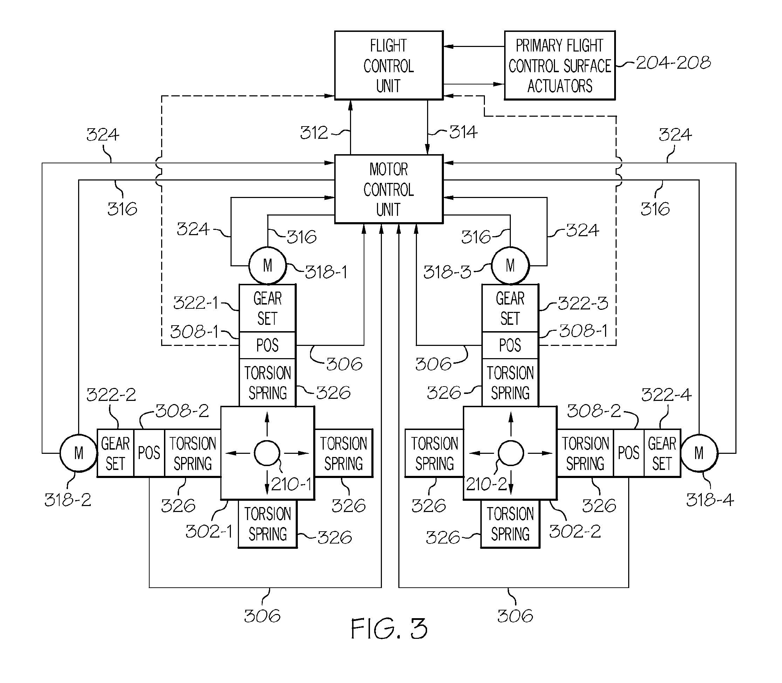

Turning now to FIG. 3, which is also a functional block diagram of the flight control surface actuation system 200 depicting portions thereof in slightly more detail, the flight control sticks 210 are each coupled to a gimbal assembly 302 (e.g., 302-1, 302-2), and are each configured to move, in response to input from either a pilot or a co-pilot, to a control position in a rotational direction. Although the configuration of the flight control sticks 210 may vary, in the depicted embodiment, and with quick reference to FIG. 2, each flight control stick 210 is configured to rotate, from a null position 220 to a control position, about two perpendicular rotational axes, which in the depicted embodiment are a pitch axis 222 and a roll axis 224. More specifically, if the pilot or co-pilot moves the flight control stick 210 in a forward direction 226 or an aft direction 228, to thereby control aircraft pitch, the flight control stick 210 rotates about the pitch axis 222. Similarly, if the pilot or co-pilot moves the flight control stick 210 in a port direction 232 or a starboard direction 234, to thereby control aircraft roll, the flight control stick 210 rotates about the roll axis 224. It will additionally be appreciated that the flight control stick 210 may be moved in a combined forward-port direction, a combined forward-starboard direction, a combined aft-port direction, or a combined aft-starboard direction, and back to or through the null position 220, to thereby implement a combined aircraft pitch and roll maneuver.

Returning once again to FIG. 3, the flight control sticks 210, as noted above, are each configured to supply position signals 306 to either the motor control unit 212, the flight control unit 202, or both, that are representative of its position. To do so, at least two position sensors 308 (e.g., 308-1, 308-2) are coupled to each flight control stick 210, though it will be appreciated that more or less than this number of position sensors could be used. No matter the specific number, it will be appreciated that the position sensors 308 may be implemented using any one of numerous types of position sensors including, but not limited to, RVDTs and LVDTs. The motor control unit 212, at least in some embodiments, upon receipt of the position signals 306, supplies flight control surface position signals 312 to the flight control unit 202, which in turn supplies power to the appropriate primary flight control surface actuators 204-208, to move the appropriate primary flight control surfaces 102-106 to the appropriate positions, to thereby implement a desired maneuver. Alternatively, and as mentioned above and as depicted in phantom in FIG. 3, the flight control unit 202 may receive the position signals 306 directly from the positions sensors 308 and, in response, supply power to the appropriate primary flight control surface actuators 204-208, to move the appropriate primary flight control surfaces 102-106 to the appropriate positions.

As FIG. 3 additionally depicts, the motor control unit 212 also receives one or more force feedback influence signals 314 from the flight control unit 202, and supplies motor drive signals 316 to one or two pilot motors 318-1, 318-2, or one or two co-pilot motor 318-3, 318-4, or various combinations thereof. The motors 318, which are each coupled to one of the flight control sticks 210 via associated gear sets 322 (e.g., 322-1, 322-2, 322-3, 322-4), are each operable, upon receipt of the motor drive signals 316, to supply a feedback force to the associated flight control stick 210. The motor drive signals 316 may vary in magnitude based, for example, on the position of the flight control sticks 210 and various aircraft and control surface conditions, as represented by the one or more feedback influence signals 314. The motor drive signals 316 supplied to the pilot flight control stick 210-1 may also vary based on the position of the co-pilot flight control stick 210-2, and vice-versa. The flight control stick 210, in response to the feedback force supplied from the motor 318, supplies haptic feedback to the pilot or co-pilot, as the case may be. In a particular preferred embodiment, the motors 318 are implemented as brushless DC motors, and current feedback and commutation signals 324 are supplied to the motor control unit 212.

The system 200, in addition to using the motors 318 to supply active haptic feedback to the pilot and/or co-pilot, includes a plurality of passive feedback mechanisms associated with each control stick 210. In the depicted embodiment the passive feedback mechanisms are each configured to passively supply haptic feedback to the flight control sticks 210 in the unlikely event the associated motors 318, the motor control unit 212, or various other electrical components become inoperable and prevent, or at least inhibit, active feedback. It will be appreciated, however, that in alternative embodiments, the system 200 may be configured without the motors 318, and include only the passive feedback mechanisms to supply haptic feedback. In either instantiation, the passive feedback mechanisms are implemented using a plurality of torsion bars 326. Each torsion bar 326 is coupled to its associated user interface 210, with two or more torsion bars 326 disposed along the pitch axis 222 and two or more torsion bars 326 disposed along the roll axis 224. As was just eluded to, each torsion bar 326 is configured to selectively supply a feedback force to its associated flight control stick 210 that opposes the rotational movement direction of the associated flight control stick 210 and that varies as a function of the control position and the rotational direction. To more fully explain how the torsion bars 326 are configured to provide this functionality, a more detailed description of at least a portion of the gimbal assemblies 302 will now be provided.

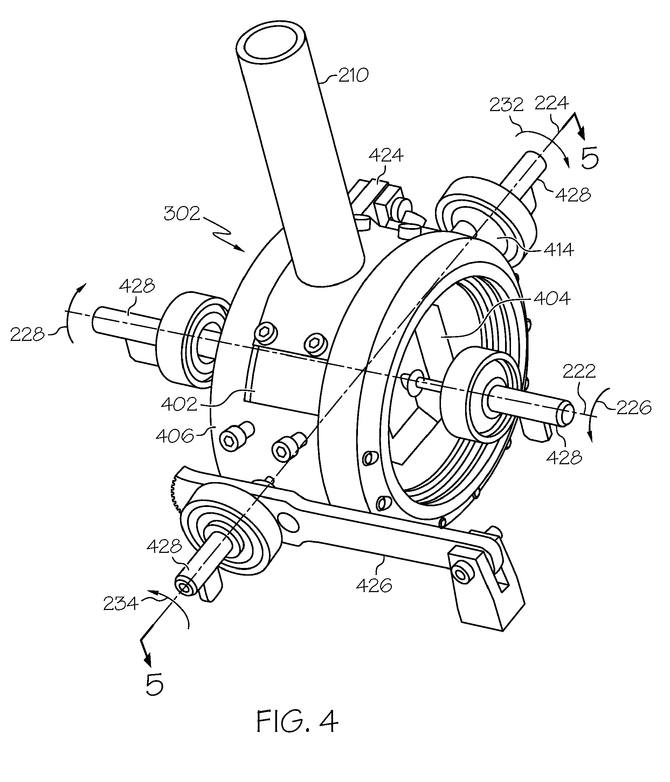

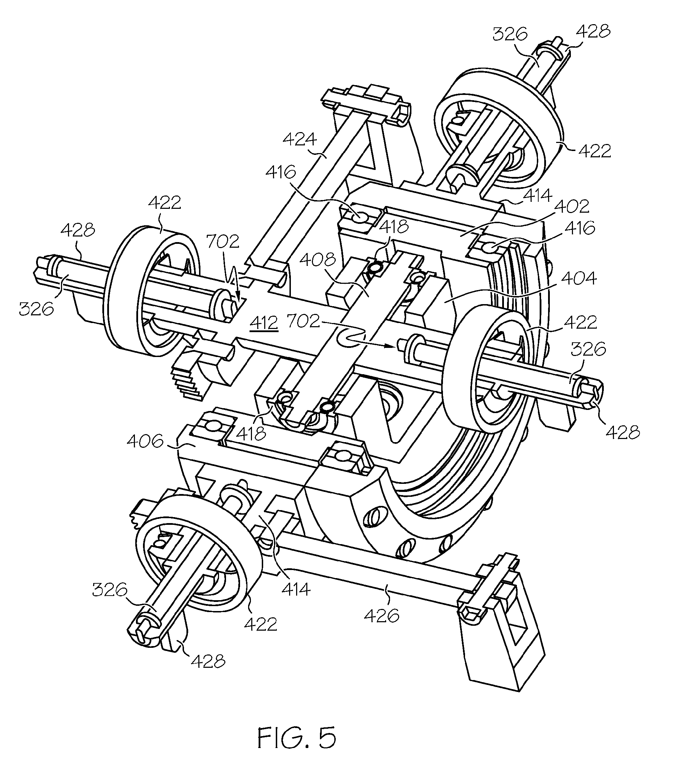

Referring now to FIGS. 4 and 5, a plan view and a cross section view, respectively, of one of the gimbal assemblies 302 is depicted. The gimbal assembly 302, as previously noted, is configured such that the user interface 210 rotates from the null position 220 (see FIG. 2) about the pitch axis 222 and the roll axis 224, to implement a pitch, a roll, or a combination pitch-roll maneuver. To do so, the gimbal assembly 302 includes a pitch hub 402, a main hub 404, a roll hub 406, an inner shaft 408, a pitch shaft 412, and a plurality of roll shafts 414, all mounted in a non-illustrated housing. The user interface 210 is coupled to the pitch hub 402, which is coupled to the main hub 404 and is rotationally mounted within the roll hub 406 via a plurality of pitch bearings 416. The inner shaft 408 extends through the pitch shaft 412 along the roll axis 224, and is rotationally mounted within the main hub 404 via a plurality of roll bearings 418. The pitch shaft 412 extends through the main hub 404 along the pitch axis 222 and is rotationally mounted within the non-illustrated housing via a plurality of support bearings 422. The roll shafts 414 are each coupled to the roll hub 406 and extend along the roll axis 224, and are each rotationally mounted within the non-illustrated housing via a support bearing 422.

Before proceeding further it is noted that, for clarity and ease of depiction, the active feedback motors 318, gear sets 322, and position sensors 308 are not depicted in FIGS. 4 and 5. In the depicted embodiment, however, it will be appreciated that the motors 318 and associated gear sets 322 are coupled to the gimbal assembly 302 via an actuation arm. More specifically, one of the motors 318-1(3)is coupled to the pitch shaft 412 via a pitch actuation arm 424, and the other motor 318-2(4) is coupled to one of the roll shafts 414 via a roll actuation arm 426. It will nonetheless be appreciated that the motors 318 could instead be coupled to the user interface 210 along the axes 222, 224, for example, via appropriate gear sets.

Returning once again to the description, and with continued reference to FIGS. 4 and 5, it is seen that the gimbal assembly 302 includes a plurality of torsion bar anti-rotation housings 428. Each torsion bar anti-rotation housing 428 is partially disposed within the pitch shaft 412 or one of the roll shafts 414. More specifically, two torsion bar anti-rotation housings 428 are partially disposed within the pitch shaft 412, and two torsion bar housings 428 are partially disposed, one each, within the roll shafts 414. The pitch shaft 412 and roll shafts 414 are mounted to rotate relative the associated torsion bar anti-rotation housings 428, which preferably are each at least partially anti-rotated. Thus, when the pitch shaft 412, or the roll shafts 414, or both rotate, and depending upon the direction of rotation, the associated torsion bar anti-rotation housing 428 may be prevented from rotating. As FIGS. 4 and 5 also depict, each torsion bar 326 is housed partially within one of the torsion bar anti-rotation housings 428 and partially within either the pitch shaft 412 or one of the roll shafts 414. As will now be explained, the pitch shaft 412 and roll shafts 414, at least in the depicted embodiment, function as torsion bar drive housings, and selectively rotate one end of the associated torsion bars 326 when the user interface 210 is rotated, whereas the torsion bar anti-rotation housings 428 anti-rotate the opposite ends of the associated torsion bars 326 when the torsion bar drive housings rotate the associated torsion bars 326.

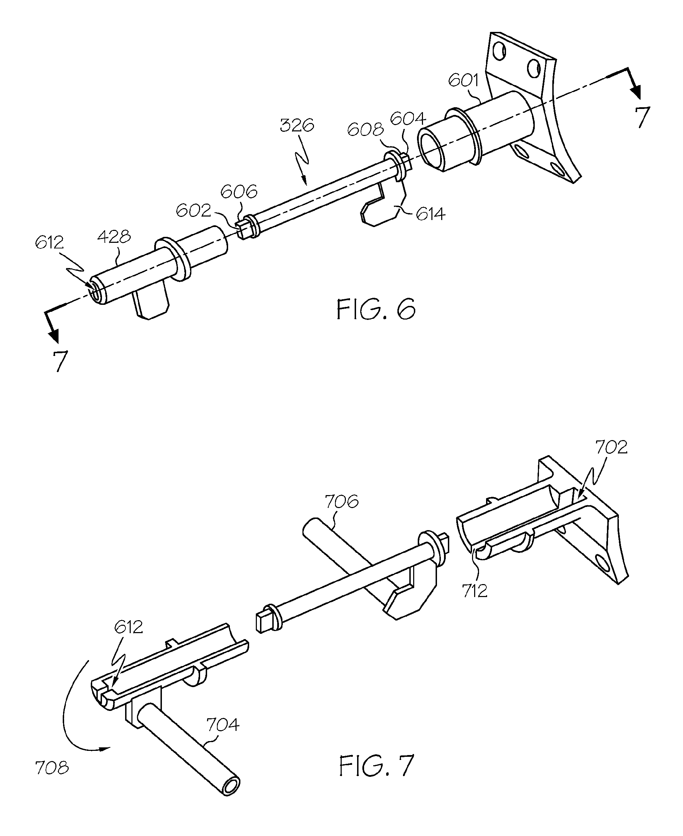

Referring now to FIGS. 6 and 7, in combination with FIG. 5, the configuration of one of the torsion bars 326, torsion bar anti-rotation housings 428, and torsion bar drive housings 601 will now be described. Before doing so, it is noted that in the depicted embodiment one of the roll shafts 414 functions as the torsion bar drive housing 601. Moreover, as was alluded to above, and will be explained further below, the pitch shaft 412 also functions as a torsion bar drive housing for two of the torsion bars 326. In any case, the torsion bar 326 includes a first end 602, a second end 604, an anti-rotation tang 606, and a drive tang 608. The first end 602 of each torsion bar 326 is anti-rotated, and the second end 604 of each torsion bar 326 is selectively rotated. This is accomplished by disposing the torsion bar 326 partially within a torsion bar anti-rotation housing 428 and partially within a torsion bar drive housing 601. More specifically, each torsion bar drive housing 601 includes an anti-rotation slot 612, and each torsion bar drive housing 601 includes a drive slot 702. As is depicted more clearly in FIG. 5, the torsion bar anti-rotation tang 606 is inserted in, and is continuously engaged by, the anti-rotation slot 612, and the torsion bar drive tang 608 is inserted within the drive slot 702. Moreover, it is seen that each end of the pitch shaft 412 is configured as a torsion bar drive housing 601 and has a torsion bar drive housing slot 702 formed therein. As will be described in more detail further below, the drive slot 702 only selectively engages the torsion bar drive tang 608.

As shown in FIG. 7, a plurality of adjustment mechanisms are associated with each torsion bar 326, and include a preload force adjustment mechanism 704 and a torsion bar retainer mechanism 706. The preload force adjustment mechanism 704 implements two functions. The first function that the preload force adjustment mechanism 704 implements is to partially anti-rotate the anti-rotation housing 428. In the depicted embodiment it is seen that the preload force adjustment mechanism 704 engages a portion of the anti-rotation housing 428, and thereby prevents the anti-rotation housing 428, and concomitantly the first end of the torsion bar 326, from rotating in the direction indicated by arrow 708. The second function that the preload force adjustment mechanism 704 implements is, as its nomenclature implies, to adjust a preload force supplied by the torsion bar 326 to the user interface 210 when the torsion bar 326 is in its null position; that is, when the torsion bar 326 is not being rotated by the user interface 210. The preload force is adjustable and is the "break out force" that must be supplied to the user interface 210 to move it out of the null position 220 in the particular rotational direction. It will be appreciated that the preload force adjustment mechanism 704 may be implemented using any one of numerous suitable devices, such as a threaded screw-type device.

The torsion bar retainer mechanism 706, which may also be implemented using any one of numerous suitable devices, such as a threaded screw-type device, retains the preload force supplied by the torsion bar 326 to the user interface 210 when the torsion bar 326 is in its null position. Although this may be accomplished using any one of numerous suitable configurations, in the depicted embodiment it is seen that the torsion bar 326 further includes a retainer tang 614, which extends through a groove 712 formed in the torsion bar drive housing 601. The torsion bar retainer mechanism 706 engages the torsion bar retainer tang 614 when the torsion bar 326 is in its null position, thereby retaining the preload force supplied by the torsion bar 326.

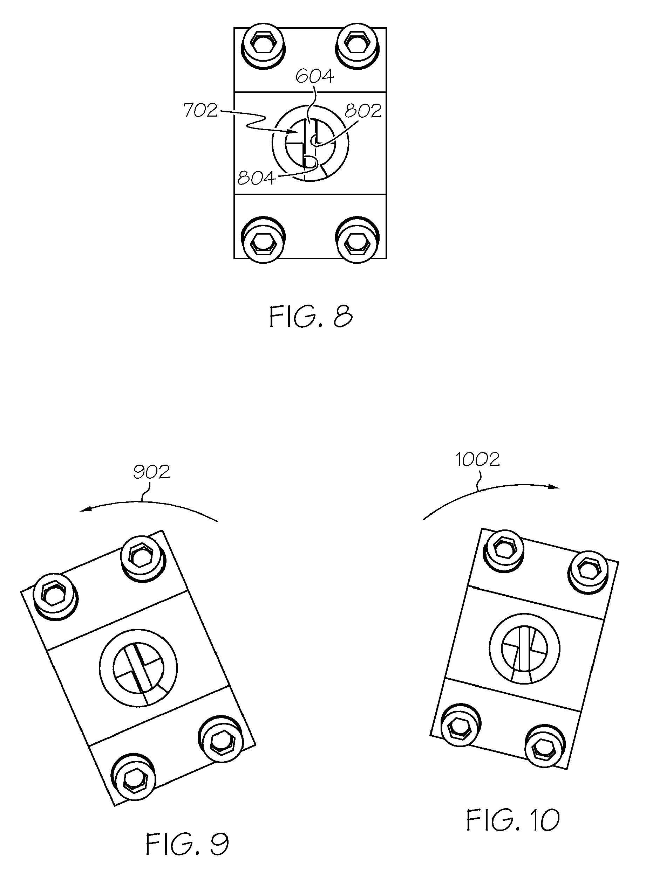

Turning now to FIGS. 8-10, the configuration of the torsion bar drive housing slot 702, and how it only selectively engages the torsion bar drive tang 608, will be described. The torsion bar driving housing slots 702 each include a first engagement surface 802 and a second engagement surface 804. The first and second engagement surfaces 802, 804 are axially offset from each other and thus only selectively engage the associated torsion bar drive tang 608. More specifically, and as FIGS. 9 and 10 more clearly depict, when the user interface 210 is rotated in the direction indicated by arrow 902, the torsion bar drive housing slot 702 engages, and thus rotates, the associated torsion bar second end 604. As a result, the torsion bar 326 is twisted and supplies rotational resistance (e.g., passive haptic feedback) to the user interface 210. As the user interface 210 is rotated in the direction indicated by arrow 1002 in FIG. 10, when it reaches its null position it is engaged by the preload retainer mechanism 706, and is thus stopped short of attaining a free state. If the user interface 210 is continued to be rotated in this direction 1002 beyond the user interface null position 220, the torsion bar drive housing slot 702 does not engage the associated torsion bar second end 604. The torsion bar 326 will thus not add force into adjacent vectors. It will be appreciated, however, that the torsion bar 326 disposed along the same rotational axis 222 or 224 will supply the appropriate rotational resistance.

The passive centering and haptic feedback system described herein for use in conjunction with a user interface independently provides rotational resistance in a plurality of rotational directions. The system provides for the setting and adjustment of a preload force to the user interface, for retaining the set preload force, for passively returning the user interface to its null position, and for preventing each passive mechanism from introducing additional force into adjacent vectors. The system additionally enables the spring gradients in one or both rotational directions about one or both perpendicular axes to be different, and for the preload forces to be set in dependence upon the direction the user interface is moved relative to both axes.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A user interface system, comprising:
a user interface (210) configured to rotate, from a null position (220), about two perpendicular rotational axes (222, 224), the user interface (210) adapted to receive an input force and, in response to the input force, to rotate, from the null position (220) to a control position, about one or both of the rotational axes (222, 224) in a rotational direction; and
a plurality of torsion bars (326) coupled to the user interface (210), the plurality of torsion bars (326) including two or more torsion bars (326) disposed along a first one of the rotational axes (222, 224) and two or more torsion bars (326) disposed along a second one of the rotational axes (222, 224), each torsion bar (326) configured to selectively supply a feedback force to the user interface (210) that opposes the rotational direction and that varies as a function of the control position and the rotational direction.

2. The user interface system of Claim 1, wherein:
the user interface (210) is rotatable about each rotational axis (222, 224) from the null position (220) to a maximum position in both a first rotational direction and a second rotational direction; and
each torsion bar (326) is configured such that the feedback force it selectively supplies to the user interface (210) increases linearly from a minimum force magnitude to a maximum force magnitude as the user interface (210) rotates from the null position (220) to the maximum position.

3. The user interface system of Claim 1, wherein:
each torsion bar (326) is configured to supply a preload force to the user interface (210) when the user interface (210) is in the null position (220); and
each torsion bar (326) is disposed in a torsion bar null position when it is supplying the preload force to the user interface (210).

4. The user interface system of Claim 3, further comprising:
a plurality of preload force adjustment mechanisms, each preload force adjustment mechanism (704) disposed adjacent to, and configured to independently adjust the preload force of, one of the torsion bars (326).

5. The user interface system of Claim 4, further comprising:
a plurality of torsion bar retainer mechanisms (706), each torsion bar retainer mechanism (706) disposed adjacent to, and configured to independently retain the preload of, one of the torsion bars (326) when it is in its torsion bar null position.

6. The user interface system of Claim 1, wherein:
the user interface (210) is rotatable about the first one of the rotational axes (222, 224) in two rotational directions, and about the second one of the rotational axes (222, 224) in two rotational directions;
each torsion bar (326) includes a first end (602) and a second end (604);
the first end (602) of each torsion bar (326) is at least partially anti-rotated; and
the second end (604) of each torsion bar (326) is coupled to the user interface (210) in a manner that the second end (604) rotates in one of the two rotational directions about the first one of the rotational axes (222, 224) or one of the two rotational directions about the second one of the rotational axes (222, 224).

7. The user interface system of Claim 6, further comprising:
a plurality of torsion bar anti-rotation housings (428), each torsion bar anti-rotation housing (428) at least partially fixed against rotation and surrounding a section of one of the torsion bars (326), each anti-rotation housing (428) coupled to, and thereby at least partially anti-rotating, the first end (602) of one of the torsion bars (326); and
a plurality of torsion bar drive housings (601), each torsion bar drive housing (601) coupled to the user interface (210) and surrounding a section of one of the torsion bars (326), each torsion bar drive housing (601) configured to selectively rotate the second end (604) of one of the torsion bars (326) when the user interface (210) rotates about one the rotational axes (222, 224) in a rotational direction.

8. The user interface system of Claim 7, wherein:
each torsion bar (326) includes a first tang formed its first end (602) and a second tang formed on its second end (604);
each torsion bar anti-rotation housing (428) includes an anti-rotation slot (612) that continuously engages one of the first tangs;
each torsion bar drive housing (601) includes a drive slot (702) that selectively engages one of the second tangs.

9. The user interface system of Claim 8, further comprising:
a gimbal assembly (302) coupled between the user interface (210) and each of the torsion bar drive housings (601).

10. A user interface (210) system (200), comprising:
a user interface (210) configured to rotate, from a null position (220), about a rotational axis (222, 224), the user interface (210) adapted to receive an input force and, in response to the input force, to rotate, from the null position (220) to a control position, about the rotational axis (222, 224);
a torsion bar (326) coupled to, and configured to supply a preload force to, the user interface when the user interface (210) is in the null position (220); and
a preload force adjustment mechanism (704) disposed adjacent to, and configured to adjust the preload force of, the torsion bar (326).
